# FASCICULE DE BREVET EUROPEEN

(11) **EP 1 292 161 B1**
(45) Date de publication et mention de la délivrance du brevet: **09.02.2011**
(21) Numéro de dépôt: 02368097.8
(22) Date de dépôt: 06.09.2002
(51) Int. Cl.: H02M 3/335

(54) **Dispositif d'alimentation à découpage adapté pour les faibles consommations de courant, et téléphone cellulaire doté d'un tel dispositif**
In Schwachleistungsbetrieb laufendes Schaltnetzteil und Mobiltelefon
Switched mode power supply for low power operation and cellular telephone equipped with such a device

(30) Priorité: 07.09.2001 FR 0111568
(43) Date de publication de la demande: 12.03.2003
(73) Titulaire: STMicroelectronics S.A., 92120 Montrouge (FR)
(72) Inventeur: Nebon, Jérôme, 38000 Grenoble (FR); Balmefrezol, Alexandre, 38100 Grenoble (FR)
(74) Mandataire: Schuffenecker, Thierry

(56) Documents cités:
- EP-A- 0 338 834
- US-A- 4 302 802
- US-A- 5 731 694

## Description

### Domaine technique de l'invention

La présente invention concerne les circuits d'alimentation, et notamment un dispositif d'alimentation à découpage adapté pour des faibles consommations de courant. Le document US 4975820 divulgue une telle alimentation ayant toutes les caractéristiques des préambules des revendications 1 et 6.

### Etat de la technique

Les circuits électroniques portables se développent et se généralisent. Ils sont alimentés par des batteries ― dont la conception est également en constant développement ― qui leur fournissent l'énergie nécessaire à leur fonctionnement.

Le domaine de la téléphonie mobile illustre particulièrement ce développement de l'électronique mobile alimentée par batterie électrique. En dépit de leur miniaturisation, les téléphones cellulaires, conformes à la norme Global Service Mobile, exigent un courant d'appel important lorsqu'ils sont en fonctionnement. Au contraire, en période de veille, ils s'accommodent d'une consommation particulièrement faible, que s'efforcent d'ailleurs de réduire constamment les ingénieurs de développement de ces appareils.

Si l'on considère ce secteur particulier de l'électronique embarquée qu'est celui de la téléphonie mobile, on constate que ces appareils tendent à être équipés d'une batterie dont la taille et le poids ne cessent de diminuer en dépit des courants importants ― plusieurs centaines de milliampères ― qu'ils sont appelés à fournir en pleine charge.. La recherche de rendements importants ― en général avec des taux de plus de 90% - impose alors le recours à un circuit d'alimentation à découpage. En effet, si l'on considère une technologie donnée ― par exemple une technologie *Very Large Scale Integrated* (V.LS.I.) pour des circuits semi-conducteurs gravés à une précision de 0.13 µm par exemple, on constate que les tensions nominales de fonctionnement― 0.9 volt ou 1.2 Volts ― sont bien plus faibles que la tension nominale fournie par une batterie Ion-Lithium par exemple. Cette tension n'est d'ailleurs pas constante puisqu'elle tend à varier en fonction de l'état de charge de la batterie et du nombre de composants qui la sollicitent à un instant donné.

Il faut donc utiliser un dispositif d'alimentation régulé ayant autant que possible un rendement élevé et le responsable de la conception d'un système d'alimentation s'oriente alors naturellement vers l'emploi d'une alimentation à découpage, également connue sous la dénomination anglo-saxone de *Switched Mode Power Supply*, laquelle permet seule un rendement élevé.

SI les alimentations à découpage fonctionnent de manière satisfaisante dans une situation de pleine charge, on déplore cependant un fonctionnement peu satisfaisant à très faible charge, ce qui est par exemple le cas d'un téléphone cellulaire mise en état de veille.

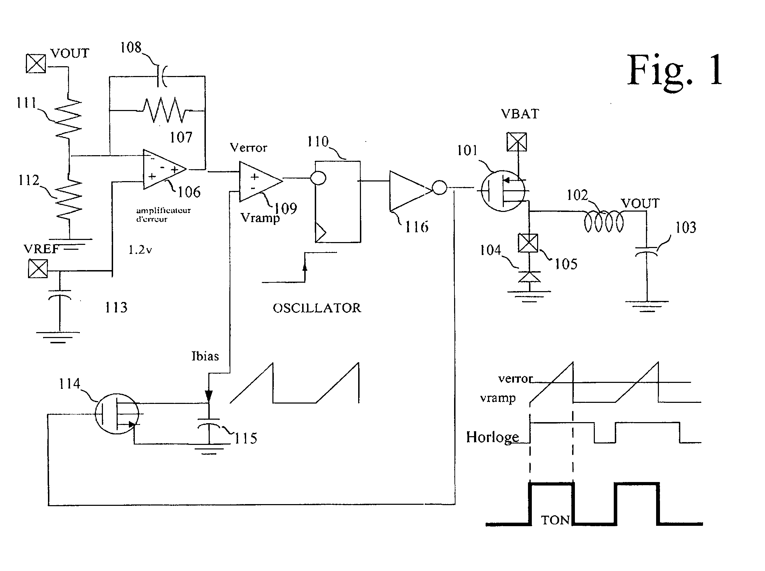

La figure 1 présente une illustration d'une architecture classique d'un dispositif d'alimentation à découpage pour un téléphone cellulaire par exemple. On trouve typiquement un circuit de puissance, composé d'un transistor PMOS 101, associé à une diode de roue libre 104, et l'ensemble fournit du courant à une charge (non représentée) via un quadripôle L-C composé d'une inductance ou self 102 et d'un condensateur 103. Le circuit de puissance est commandé par un circuit de commande basé sur un comparateur 109 et un générateur de rampe ― composé d'un transistor 114 et d'un condensateur 115 chargé par un courant I_{bias}. Un circuit amplificateur, composé d'un Amplificateur Opérationnel (A.O.) 106 associé à un circuit de contre-réaction comportant une résistance 107 et un condensateur 108 montés en parallèle, amplifie l'erreur entre la tension de sortie à réguler Vₒᵤₜ, et une tension de référence V_{ref}. La sortie de cet amplificateur est envoyée dans une des deux entrées du comparateur recevant à sa seconde entrée la tension de rampe. Ainsi, périodiquement à la fréquence d'un signal d'horloge, le comparateur génère un signal cyclique dont le rapport cyclique dépend de l'écart entre la tension Vₒᵤₜ et la tension de consigne V_{ref}. On régule ainsi le rapport cyclique d'ouverture du transistor de puissance 101 de manière à rapprocher la tension de sortie Vₒᵤₜ de la valeur souhaitée V_{ref}.

Plus particulièrement à chaque coup d'horloge, le transistor MOS 101 qui fournit le courant de charge est mis en conduction et on démarre alors la génération du signal de rampe. Lorsque la tension de rampe atteint la valeur de la tension d'erreur en sortie de l'amplificateur d'erreur, ce dernier commute et vient bloquer la commande du MOS de puissance. Si l'on imagine que la tension Vₒᵤₜ descend en deçà de la valeur de consigne V_{ref}, on voit que le signal d'erreur tend à augmenter, ce qui a pour effet d'accroître le rapport cyclique ― et en particulier le facteur Tₒₙ correspondant à la mise en conduction du transistor de puissance 101.

Ainsi la tension V_{ref} permet d'ajuster la valeur de la tension Vₒᵤₜ qui est souhaitée, et l'on observe un effet de régulation de cette tension de sortie grâce à la commande du temps d'ouverture ― Tₒₙ ― du transistor d'alimentation.

Bien que ce type d'alimentation à découpage soit d'une grande utilité pour la téléphonie mobile, on se trouve cependant confronté à un problème lorsque l'on se trouve en situation de très faible charge. En effet, lorsque le téléphone est en mode de veille et lorsque le courant consommé est particulièrement faible, la tension d'erreur Vₑᵣᵣ est elle-même très faible. Il faut pouvoir générer des valeurs particulièrement faibles pour le rapport cyclique et en particulier pour Tₒₙ, et l'on se trouve alors limité par les délais intrinsèques de commutation de la bascule, mais surtout par les délais du comparateur 109.

Pour arriver à réduire la valeur de Tₒₙ, on opte traditionnellement pour un comparateur plus rapide permettant de réduire le délai intrinsèque de commutation, mais cela se fait au prix d'une consommation de courant plus importante. Ce faisant, on réduit alors dans l'absolu la valeur de Tₒₙ. Une autre manière connue permet d'éviter la perte de rendement résultant de l'emploi d'un comparateur plus rapide. Elle consiste à agir sur la valeur relative du rapport cyclique Tₒₙ/T en réduisant la fréquence de fonctionnement de l'alimentation à découpage de manière à entrer dans un régime de fonctionnement connue sous le nom anglo-saxon de *pulse skipping*. En réduisant la fréquence de fonctionnement de 1 Mhz à 50 Khz par exemple, on arrive à réduire le rapport cyclique dans un rapport de un vingtième sans être contraint d'opter pour un comparateur plus rapide. Mais on s'aperçoit alors que l'on s'approche de la gamme des fréquences audio et que l'on vient ainsi perturber le fonctionnement de la partie RF qui assure la transmission radio frequence du téléphone. De ce fait il faut éviter tout fonctionnement en mode de pulse skipping des alimentations à découpage lorsque le téléphone est en mode de fonctionnement c'est à dire lorsque les parties RF et audio du circuit sont activées. On constate que même lorsque ces éléments sont actifs, le courant appelé peut être particulièrement faible.

On est donc confronté au dilemme suivant si l'on souhaite pouvoir faire fonctionner une alimentation à découpage - dont on a vu l'intérêt en terme de rendement - pour un téléphone cellulaire par exemple et ce dans toute la plage de courant y compris pour les plus faibles valeurs : soit on dégrade les performances audio du téléphone par mise en régime dite *pulse skipping,* soit on accepte une perte de rendement du circuit d'alimentation par augmentation de la vitesse de commutation du comparateur.

De telles limitations sont rédhibitoires au développement des nouvelles technologies de téléphones cellulaires.

Il est donc souhaitable de pouvoir bénéficier d'un circuit d'alimentation à découpage fonctionnant de manière satisfaisante aussi bien pour des charges élevées que pour de très faibles charges tout en évitant de venir perturber le fonctionnement audio de l'appareil et notamment du téléphone cellulaire.

Le brevet US 4 302 802 A (HYDE JOHN W ET AL), décrit une alimentation à découpage de type « flyback » mettant en oeuvre deux rampes, une rampe principale générée en situation de charge normale, et une rampe auxiliaire servant pour les très faibles charges afin d'introduire un retard à la conduction des transistors de puissances.

### Exposé de l'invention

La présente invention a pour but de proposer une structure d'alimentation à découpage présentant un fort rendement, et qui autorise un fonctionnement à fréquence constante même lorsque l'on est en faible consommation de courant.

Un autre but de la présente invention consiste à proposer un dispositif d'alimentation à découpage simple et qui est particulièrement adapté à la technologie des téléphones mobiles de la nouvelle génération.

L'invention réalise ces buts au moyen d'une alimentation à découpage selon la revendication 1 et au moyen d'un téléphone cellulaire selon la revendication 6.

On arrive ainsi à compenser le retard intrinsèque du comparateur et on permet le fonctionnement pour des très faibles valeurs du courant consommé. On peut même adjoindre au comparateur un circuit d'extinction de son alimentation dès lors que la comparaison entre la tension d'erreur et la tension de rampe aura été effectuée, en sorte que l'on pourra encore réduire la consommation de courant.

Préférentiellement la sortie du comparateur est connectée à une bascule ― par exemple de type D - et le dit comparateur est désactivé une fois la comparaison effectuée de manière à réduire encore la consommation d'énergie.

Dans un mode de réalisation préféré, le circuit de retard comporte une première et seconde bascule présentant une entrée D recevant un potentiel de référence. Un signal d'horloge vient périodiquement commander l'échantillonnage des deux bascules et leur mise à zéro est commandé par la sortie du comparateur. La sortie de la première bascule est transmise via une ligne à retard à une première entrée d'une porte ET, laquelle présente une seconde entrée connectée à la sortie de la seconde bascule D. La porte ET fournit un signal de commande pour le transistor de puissance. En raison de l'existence de la ligne de retard, on assure ainsi une commutation différée de la sortie de la porte ET par rapport à l'instant de commutation de la seconde bascule, laquelle est utilisée pour commander la mise à zéro du circuit de génération de rampe.

La mise en conduction du transistor de puissance est assurée avec un retard alors que son extinction est immédiate lors de la commutation de la seconde bascule.

On ajustera par le délai du circuit de retard à la valeur du retard combiné du comparateur et de la bascule de manière à abaisser le rapport cyclique utilisable à une valeur souhaitée.

### Description des dessins

La figure 1 illustre le schéma de principe d'une alimentation à découpage basée sur un comparateur et un circuit de génération de rampe.

La figure 2 représente une alimentation à découpage modifiée de manière à permettre l'utilisation des valeurs les plus basses du rapport cyclique.

La figure 3 illustre un mode de réalisation préféré de l'alimentation à découpage, comportant deux bascules D permettant d'assurer la désynchronisation entre la commande du circuit de génération de rampe et la mise en conduction du transistor de puissance.

Les figures 4a à 4e illustrent le fonctionnement du circuit en l'absence de toute désynchronisation.

Les figures 5a à 5d illustrent le détail des chronogrammes des figures 4a à 4e.

Les figures 6a à 6e illustrent le fonctionnement du circuit lorsque la mise en conduction du transistor de puissance est désynchronisée par rapport au démarrage de la génération de la rampe.

Les figures 7a à 7d illustrent le détail des chronogrammes des figures 6a à 6e.

### Description d'un mode de réalisation préféré

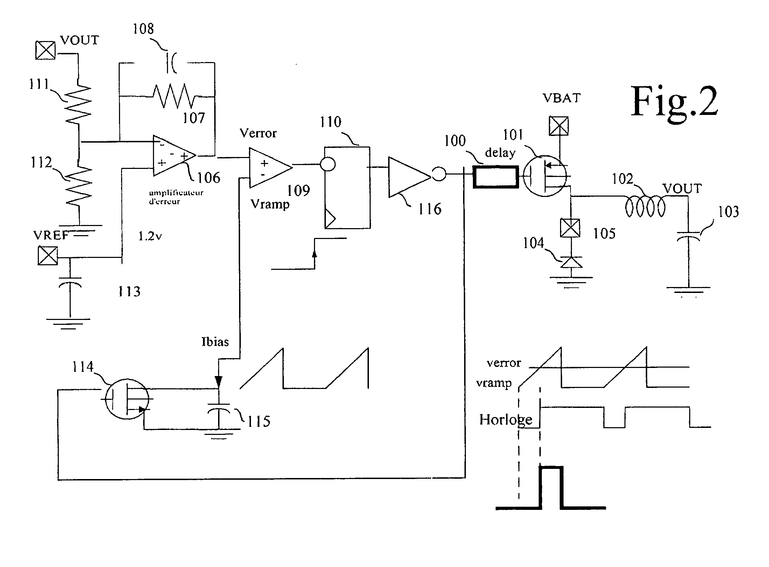

On va décrire à présent d'une manière complète un mode de réalisation préféré du circuit d'alimentation par découpage en référence avec la figure 2. Par souci de clarté , on a conservé dans la figure 2 les numéros de références pour les éléments qui sont communs à ceux de la figure 1.

Comme on le verra, le circuit est particulièrement adapté à la conception d'un circuit d'alimentation pour un téléphone cellulaire de nouvelle génération. Un téléphone cellulaire moderne comporte généralement un processeur de traitement du signal *(Digital Signal Processing* D.S.P.) qui est grand consommateur de courant en mode actif et qui est associé à un microcontrôleur pour la gestion du clavier, de l'écran, de l'interface utilisateur etc...., lequel nécessite une alimentation électrique bien moindre. On peut ainsi, dans un mode de veille, faire fonctionner le téléphone avec un très faible courant d'alimentation alors que, dans un mode de fonctionnement actif ― lorsque l'usager se sert de son téléphone ― les fonctionnalités du processeur D.S.P. sont pleinement mises en oeuvre dans l'appareil, venant ainsi substantiellement accroître le courant consommé par le téléphone. Le circuit d'alimentation à découpage, parce qu'il autorise un fonctionnement même pour des valeurs très faibles du rapport cyclique, est donc particulièrement adapté à l'alimentation de téléphones cellulaires qui présentent ces deux modes de fonctionnement bien différents. Il est cependant clair que l'homme du métier pourra adapter l'enseignement de l'invention à toute autre dispositif électronique mobile.

On décrira également un circuit comportant un transistor de puissance de type PMOS étant entendu que l'homme du métier adaptera sans difficulté le circuit à un transistor de puissance de polarité inversé. La figure 2 montre ainsi un transistor PMOS 101 dont la source est connectée à une source de tension non régulée, laquelle est en général fournie par une batterie de type Ion-Lithium par exemple. Comme on le sait, ce type de batterie présente des tensions nominales égales à plusieurs volts et il convient de réduire la tension de sortie à des valeurs prescrites qui sont compatibles avec la technologies de produits semi-conducteurs utilisés, par exemple entre 0.9 ou 1.2. Volts. Le drain du transistor PMOS est connecté à la masse via une diode de roue libre 105 et également connectée à une première électrode d'une self 102 connectée en série avec un condensateur 103. La tension de sortie régulée Vₒᵤₜ est accessible au bornes du condensateurs 103 et peut servir de tension d'alimentation pour une charge donnée (non représentée).

On décrit à présent plus particulièrement le système de commande du transistor PMOS 101. Ce système de commande comporte un Amplificateur Opérationnel (A.O.) 106 dont l'entrée positive reçoit une tension de référence filtrée par un condensateur 113. L'A.O. 106 est monté en amplificateur linéaire avec une boucle de contre-réaction, laquelle est composée d'une résistance 107 et d'un condensateur 108 qui sont montés en parallèle et l'ensemble permet de générer un signal d'erreur représentatif de l'écart entre la tension régulée Vₒᵤₜ et la tension de référence V_{ref}. Le signal d'erreur en sortie de l'A.O. 106 est transmis à une entrée positive d'un second A.O. 109, monté en circuit comparateur, et dont l'entrée négative reçoit une tension de rampe générée par un circuit de génération de rampe basé sur un transistor 114 qui est associé à un condensateur 115. La sortie de l'A.O. 109 est transmise via une bascule 110, par exemple de type bascule D, et un inverseur 116 à une entrée de grille du transistor de puissance PMOS 101, via un élément de retard 100.

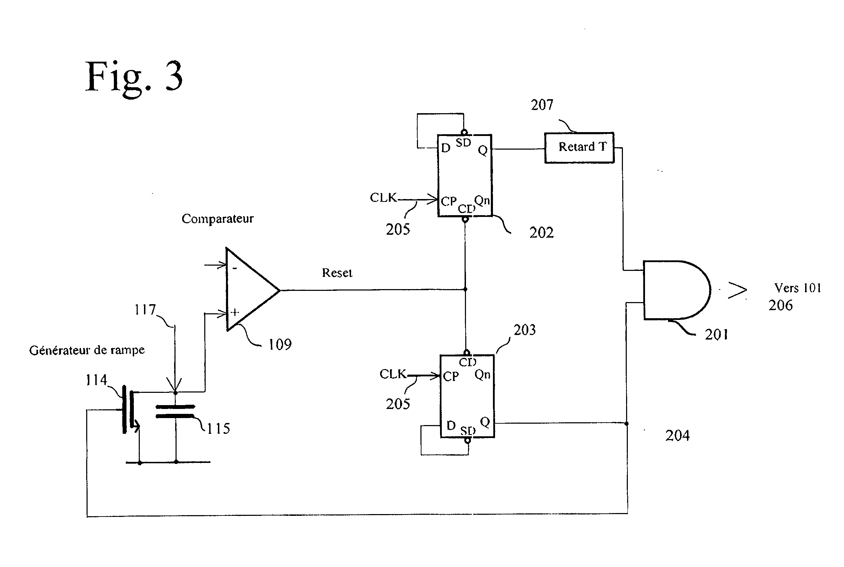

L'élément de retard 100 est conçu de manière à introduire un retard prédéterminé sur les flancs descendants du signal de grille du transistor PMOS 101, c'est à dire un retard à la mise en conduction de ce dernier. Pour que le système fonctionne d'une manière satisfaisante en compensant les délais inhérents au comparateur 109, voire la bascule 110, il faut observer que l'élément de retard 100 doit introduire un retard à l'enclenchement mais non au déclenchement. On verra ci-après que l'on peut réaliser d'une manière simple cet élément lorsque l'on décrira le mode de réalisation préféré de la figure 3. En introduisant un retard à la mise en conduction du transistor de puissance 101, on arrive à introduire une désynchronisation locale en faisant démarrer la génération de la rampe avant la mise en conduction du transistor de puissance 101 et par suite on peut compenser tous les délais de commutation dans la chaîne. Ceci est réalisée simplement par une connexion directe de la sortie de l'inverseur 116 à l'entrée grille du transistor 114 assurant ainsi la remise à zéro du circuit de génération de rampe. En revanche, ce n'est qu'après l'écoulement du retard prédéfini que le transistor 101 ― dont la grille est connectée à la sortie de l'élément de retard ― est mis en conduction. On voit ainsi, comme cela est illustré par les chronogrammes présent sur la figure 2, que l'on arrive à réduire la largeur de la pulse Tₒₙ de la valeur du retard.

Si l'on souhaite parvenir à des valeurs particulièrement faibles du rapport cycliques, et ce sans utiliser un circuit comparateur rapide, on pourra avantageusement utiliser des techniques d'appariement de condensateurs et de miroirs de courant qui sont bien connues de l'homme du métier, lesquelles permettront d'ajuster précisément le retard de l'élément 100 de manière à faire fonctionner l'alimentation à découpage dans une large gamme de courant de sortie, et notamment pour les valeurs les plus faibles.

Il en résulte un avantage substantiel. Outre qu'il permet de faire fonctionner le circuit d'alimentation à découpage pour des valeurs très faibles du rapport cyclique Tₒₙ /T, on peut également provoquer l'extinction du comparateur 109 dès la comparaison réalisée. Cela permet de réduire encore la consommation globale du circuit, ce qui est un résultat que l'on ne pourrait pas obtenir avec d'autres techniques, notamment celle basée sur l'emploi d'une double rampe montante-descendante et en faisant commuter le comparateur deux fois par cycle d'horloge.

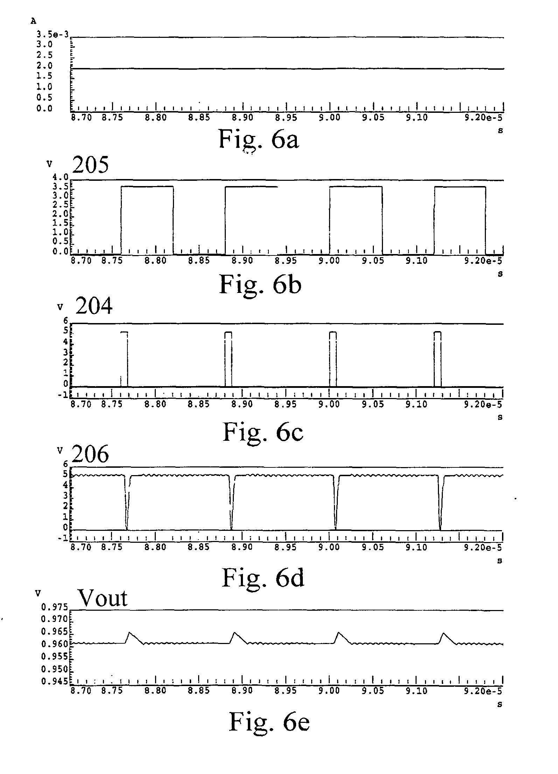

La figure 3 montre un mode de réalisation préféré du circuit de désynchronisation comportant une première bascule 202 et une seconde bascule 203. les deux bascules 202 et 203 présentent chacune une entrée D et une entrée SD qui sont connectées à la tension d'alimentation positive. Elles reçoivent à une entrée CP un signal d'horloge CLK 205 permettant de rythmer la génération de la rampe et dont des chronogrammes représentatifs sont illustrés dans la figure 6b. Les bascules 202 et 203 sont réinitialisées au moyen d'un signal présenté à leur entrée CD, laquelle est connectée à la sortie du comparateur 109.

La première bascule 202 présente une sortie Q qui est connectée à une entrée d'un élément de retard 297 dont la sortie est connectée à une première entrée d'une porte ET 201.

La seconde bascule 203 présente une sortie Q qui est connectée à une seconde entrée de la porte ET 201, mais sert également de circuit 204 de commande du générateur de rampe comportant le transistor 114, le condensateur 115 et une source de courant 117. Dans le but d'illustrer la grande variété des implémentations possibles de l'invention, on a connecté cette fois la sortie du circuit de génération de rampe à l'entrée positive du circuit comparateur 109, contrairement à la représentation de la figure 2.

La sortie du comparateur est alors connectée directement à deux entrées CD des bascules 202 et 203 et sert ainsi de remise à zéro pour ces deux bascules.

La porte ET 201 fournit une tension de sortie 206 permettant de commander la mise en conduction du transistor MOS 101 de puissance qui est représenté sur la figure 1. On pourra éventuellement adjoindre, en tant que de besoin, un circuit de type buffer adéquat (non représenté).

Le fonctionnement du circuit de désynchronisation est le suivant. On suppose le transistor de puissance dans un état de non conduction. Sur le front montant du signal d'horloge CLK , présent sur l'électrode 205, la sortie Q des deux bascules passe à un état haut. Cet état haut est transmis immédiatement à la seconde entrée de la porte ET et commande également via le circuit 204 le démarrage de la rampe du générateur de rampe. Cependant, ce n'est que lorsque l'état haut est transmis par l'élément de retard 207 à la première entrée de la porte ET 201 que cette dernière voit sa sortie commuter, venant ainsi mettre en conduction le transistor MOS de puissance.

On constate ainsi qu'il y a bien un décalage entre la mise en conduction de ce transistor et le démarrage du générateur de rampe, lequel est commandé dès la commutation des deux bascules.

Si l'on examine à présent la mise hors conduction de ce même transistor, on observe que dès que la tension de la rampe atteint la valeur de la tension d'erreur à l'entrée du comparateur, ce dernier commute et provoque ainsi la remise à zéro des deux bascules 202 et 203. Instantanément, les deux bascules changent d'état, et l'état bas de la sortie Q 204 de la seconde bascule vient alors immédiatement bloquer la porte ET 201, venant commander l'extinction sans délai du transistor MOS 101.

On observe ainsi que l'on a bien un retard ― résultant de l'élément 207 ― à la mise en conduction du transistor de puissance, mais que son extinction est immédiate. On obtient cet effet au moyen de la commande du circuit de génération de rampe par la sortie de la seconde bascule, tandis que la première est seulement transmise après un délai à l'entrée de la porte ET 201.

On peut ainsi compenser le délai intrinsèque du comparateur, mais également tous les délais de la chaîne de commutation et faire ainsi faire fonctionner l'alimentation à découpage pour des valeurs très faibles du courant d'alimentation, tout en évitant le régime du *pulse skipping.*

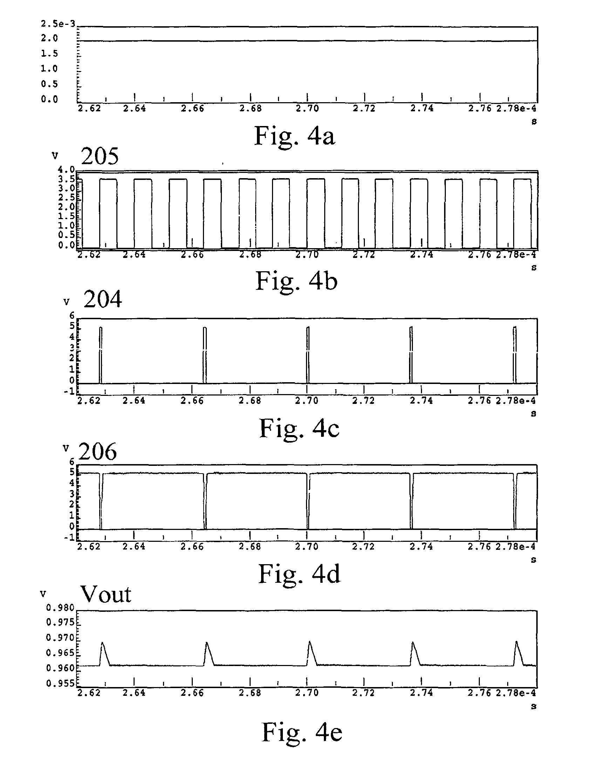

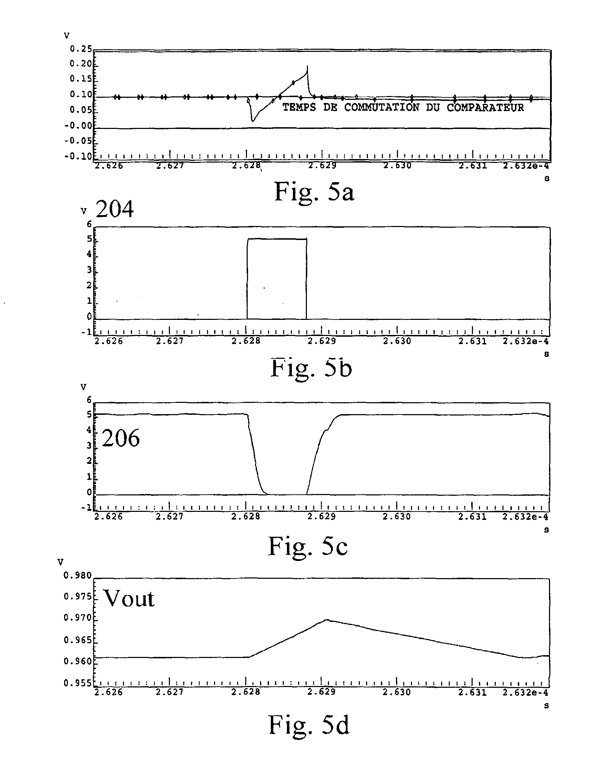

Les figures 4a-e et 5a-d illustrent des chronogrammes de simulation des différentes tensions existantes dans le circuit d'alimentation lorsque l'on maintient la synchronisation entre la mise à zéro du circuit de générateur de rampe et la mise en conduction du transistor de puissance.

Plus particulièrement, la figure 4 a illustre la courbe du courant de charge.

La figure 4b illustre le signal d'horloge 205.

La figure 4c montre le signal Q de sortie de la seconde bascule, laquelle vient commander la mise à zéro du circuit de générateur de rampe.

La figure 4d illustre la tension 206 en sortie de la porte ET 201, laquelle sert à commander la mise en conduction du transistor de puissance 101.

La figure 4e montre la tension Vₒᵤₜ aux bornes de la charge.

La figure 5a illustre particulièrement en détail le signal à l'entrée du comparateur 109.

La figure 5b illustre particulièrement en détail le signal Q 204 de sortie de la seconde bascule, laquelle vient commander la mise à zéro du circuit de générateur de rampe.

La figure 5c illustre particulièrement en détail la tension 206 en sortie de la porte ET 201, laquelle sert à commander la mise en conduction du transistor de puissance 101.

La figure 5d montre le détail de la tension de sortie Vₒᵤₜ aux bornes de la charge.

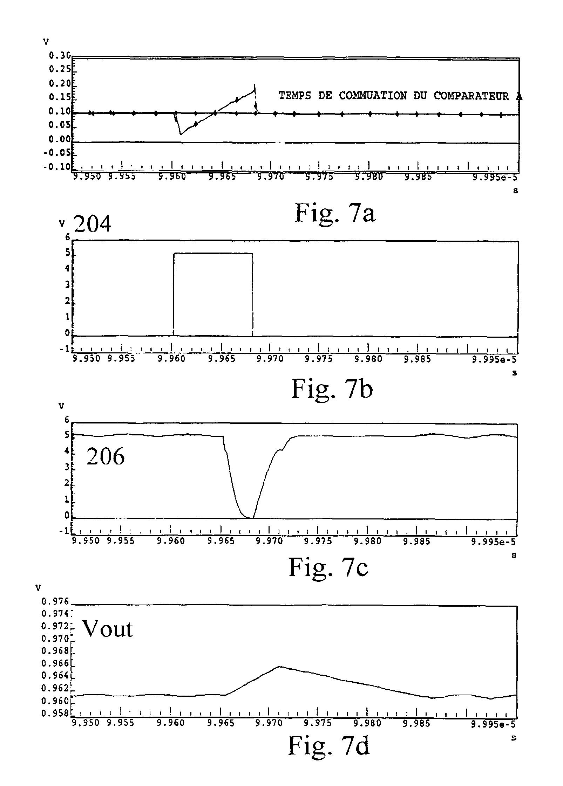

Les figures 6a-e et 7a-d illustrent des chronogrammes représentatif des mêmes tension lorsque l'on procède à la désynchronisation entre le démarrage de la rampe et la mise en conduction du transistor de puissance 101.

Plus particulièrement, la figure 6a illustre la courbe du courant de charge.

La figure 6b illustre le signal d'horloge 205.

La figure 6c montre le signal Q de sortie de la seconde bascule 203, laquelle vient commander la mise à zéro du circuit de générateur de rampe.

La figure 6d illustre la tension 206 en sortie de la porte ET 201, laquelle sert à commander la mise en conduction du transistor de puissance 101.

La figure 6e montre la tension Vₒᵤₜ aux bornes de la charge.

La figure 7a illustre particulièrement en détail le signal à l'entrée du comparateur 109.

La figure 7b illustre particulièrement en détail le signal Q 204 de sortie de la seconde bascule, laquelle vient commander la mise à zéro du circuit de générateur de rampe.

La figure 7c illustre particulièrement en détail la tension 206 en sortie de la porte ET 201, laquelle sert à commander la mise en conduction du transistor de puissance 101.

La figure 7d montre le détail de la tension de sortie Vₒᵤₜ aux bornes de la charge.

On constate tout particulièrement, en comparant les figures 5c et 7c que la désynchronisation permet de substantiellement réduire le temps de mise en conduction du transistor de puissance, et ce sans avoir recours à un comparateur 109 plus rapide.

## Revendications

1. Dispositif d'alimentation à découpage composé d'un transistor de puissance (101) mis cycliquement en conduction suivant un rapport cyclique Tₒₙ/T et fournissant un courant et une tension régulée (Vₒᵤₜ) à une charge via un filtre LC, lequel comportant :
un circuit de génération d'une rampe (114, 115) commandé par un signal d'horloge et fournissant cycliquement une tension de rampe ;
un circuit amplificateur d'erreur (106) pour génér une tension d'erreur (Vₑᵣᵣₒᵣ) représentative de l'écart entre une tension de référence (V_{ref}) et ladite tension de sortie régulée (Vₒᵤₜ) ;
un comparateur (109) comparant la tension de rampe générée par ledit circuit de génération de rampe (114, 115) avec ladite tension d'erreur (Vₑᵣᵣₒᵣ) et fournissant un signal de sortie destiné à commander ledit transistor de puissance (101),
le dispositif étant **caractérisé en ce que** un élément de retard (100) vient retarder la mise en conduction dudit transistor de puissance (101) de manière à désynchroniser le démarrage de la rampe et ladite mise en conduction.

2. Dispositif d'alimentation à découpage selon la revendication 1 **caractérisé en ce que** ledit comparateur (109) est connecté à une entrée d'une bascule (110) et est ensuite désactivé dès la comparaison effectuée.

3. Dispositif d'alimentation à découpage selon la revendication 1 **caractérisé en ce qu'**il comporte :
- un premier Amplificateur Opérationnel (A.O.) 106 dont l'entrée positive reçoit une tension de référence et monté en amplificateur linéaire pour générer un signal d'erreur représentatif de l'écart entre la tension régulée Vₒᵤₜ et la tension de référence V_{ref}, ledit premier AO (106) étant monté avec une boucle de contre-réaction composée d'une résistance (107) et d'un condensateur (108) montés en parallèle,
- un circuit de génération de rampe (114, 115) ayant une entrée de mise à zéro pour générer une tension de rampe dès la détection d'un signal de mise à zéro ;
- un second Amplificateur Opérationnel (109) monté en comparateur, et recevant à une première entrée ledit signal d'erreur générée par la sortie dudit premier Amplificateur Opérationnel (106) et recevant à une seconde entrée une tension de sortie générée par ledit circuit de génération de rampe ;
- une bascule D (110) recevant en entrée la tension de sortie dudit second amplificateur Opérationnel (109),
- un inverseur (116) dont l'entrée est connecté à la sortie de ladite bascule D , ledit inverseur (116) ayant une sortie connectée à l'entrée de mise à zéro dudit circuit de génération de rampe (114, 115) ;
- un élément de retard dont une entrée est connectée à la sortie dudit inverseur (116) et dont la sortie est utilisée pour commander ledit transistor de puissance ; ledit élément de retard introduisant un retard prédéfini à la mise en conduction dudit transistor de puissance.

4. Dispositif d'alimentation à découpage selon la revendication 1 **caractérisé en ce qu'**il comporte un circuit de désynchronisation entre le démarrage de la rampe et la mise en conduction du transistor de puissance, ledit circuit comportant :
- une première bascule 202 présentant une entrée D connectée à une tension de référence et une sortie Q, ladite première bascule étant commandée par un signal d'horloge CLK (205);
- une seconde bascule 203 présentant une entrée D connectée à une tension de référence et une sortie Q, ladite première bascule étant commandée par un signal d'horloge CLK (205); ladite sortie Q étant connectée de manière à commander le démarrage dudit circuit de génération de rampe ;
- un élément de retard 100 ayant une entrée connectée à la sortie de ladite première bascule (202), et présentant une sortie ;
- une porte ET (201) ayant une première entrée connectée à ladite sortie de l'élément de retard (100), et une seconde entrée connectée à la sortie Q de ladite seconde bascule (203), et présentant une sortie servant à commander ledit transistor de puissance ;
lesdites première et seconde bascule étant connectées audit comparateur de manière à ce que la commutation de ce dernier provoque la mise à zéro desdites première et seconde bascules de manière à commander l'extinction dudit transistor de puissance.

5. Dispositif d'alimentation à découpage selon la revendication 4 **caractérisé en ce que** le circuit générateur de rampe comporte une source de courant (117) venant charger un condensateur (115) et un transistor MOS (114) permettant de décharger cycliquement le dit condensateur.

6. Téléphone cellulaire comportant un dispositif d'alimentation à découpage composé d'un transistor de puissance (101) mis cycliquement en conduction suivant un rapport cyclique Tₒₙ/T et fournissant un courant et une tension régulée (Vₒᵤₜ) à une charge via un filtre LC, lequel comportant :
un circuit de génération d'une rampe (114, 115) commandé par un signal d'horloge et fournissant cycliquement une tension de rampe ;
un circuit amplificateur d'erreur (106) pour générer une tension d'erreur (Vₑᵣᵣₒᵣ) représentative de l'écart entre une tension de référence (V_{ref}) et ladite tension de sortie régulée (Vₒᵤₜ) ;
un comparateur (109) comparant la tension de rampe générée par ledit circuit de génération de rampe (114, 115) avec ladite tension d'erreur (Vₑᵣᵣₒᵣ) et fournissant un signal de sortie destiné à commander ledit transistor de puissance (101),
le dispositif étant **caractérisé en ce que** un élément de retard (100) vient retarder la mise en conduction dudit transistor de puissance (101) de manière à désynchroniser le démarrage de la rampe et ladite mise en conduction.

7. Téléphone cellulaire selon la revendication 6 **caractérisé en ce que** ledit comparateur (109) est connecté à une entrée d'une bascule (110) et est ensuite désactivé dès la comparaison effectuée.

8. Téléphone cellulaire selon la revendication 6 **caractérisé en ce que** ledit dispositif d'alimentation comporte :
- un premier Amplificateur Opérationnel (A.O.) 106 dont l'entrée positive reçoit une tension de référence et monté en amplificateur linéaire pour générer un signal d'erreur représentatif de l'écart entre la tension régulée Vₒᵤₜ et la tension de référence V_{ref}, ledit premier AO (106) étant monté avec une boucle de contre-réaction composée d'une résistance (107) et d'un condensateur (108) montés en parallèle,
- un circuit de génération de rampe (114, 115) ayant une entrée de mise à zéro pour générer une tension de rampe dès la détection d'un signal de mise à zéro ;
- un second Amplificateur Opérationnel (109) monté en comparateur, et recevant à une première entrée ledit signal d'erreur générée par la sortie dudit premier Amplificateur Opérationnel (106) et recevant à une seconde entrée une tension de sortie générée par ledit circuit de génération de rampe ;
- une bascule D (110) recevant en entrée la tension de sortie dudit second amplificateur Opérationnel (109),
- un inverseur (116) dont l'entrée est connecté à la sortie de ladite bascule D , ledit inverseur (116) ayant une sortie connectée à l'entrée de mise à zéro dudit circuit de génération de rampe (114, 115) ;
- un élément de retard dont une entrée est connectée à la sortie dudit inverseur (116) et dont la sortie est utilisée pour commander ledit transistor de puissance ; ledit élément de retard introduisant un retard prédéfini à la mise en conduction dudit transistor de puissance.

9. Téléphone cellulaire selon la revendication 6 **caractérisé en ce qu'**il comporte un circuit de désynchronisation entre le démarrage de la rampe et la mise en conduction du transistor de puissance, ledit circuit comportant :
- une première bascule 202 présentant une entrée D connectée à une tension de référence et une sortie Q, ladite première bascule étant commandée par un signal d'horloge CLK (205);
- une seconde bascule 203 présentant une entrée D connectée à une tension de référence et une sortie Q, ladite première bascule étant commandée par un signal d'horloge CLK (205); ladite sortie Q étant connectée de manière à commander le démarrage dudit circuit de génération de rampe ;
- un élément de retard 100 ayant une entrée connectée à la sortie de ladite première bascule (202), et présentant une sortie ;
- une porte ET (201) ayant une première entrée connectée à ladite sortie de l'élément de retard (100), et une seconde entrée connectée à la sortie Q de ladite seconde bascule (203), et présentant une sortie servant à commander ledit transistor de puissance ;
lesdites première et seconde bascule étant connectées audit comparateur de manière à ce que la commutation de ce dernier provoque la mise à zéro desdites première et seconde bascules de manière à commander l'extinction dudit transistor de puissance.

## Claims

1. Switched mode power supply device composed of a power transistor (101) being periodically switched on with a periodic ratio Tₒₙ/T and providing a current and a regulated voltage (Vₒᵤₜ) to a load via a LC filter, which includes:
a ramp generation circuit (114, 115) controlled by a clock signal and periodically providing a ramp voltage;
an error amplification circuit (106) for generating an error voltage (Vₑᵣᵣₒᵣ) representative of the difference between a reference voltage (V_{ref}) and said regulated output voltage (Vₒᵤt);
a comparator (109) for comparing the ramp voltage generated by said ramp generation circuit (114, 115) with said error voltage (Vₑᵣᵣₒᵣ) and for providing an output signal arranged for controlling said power transistor (101)
the device being **characterized in that** a delay element (100) delays the switching on of said power transistor (101) such that the starting of the ramp and said switching on are desynchronized.

2. Switched mode power supply device according to claim 1 **characterized in that** said comparator (109) is connected to a flip-flop input (110) and is then disactivated when said comparison has been performed.

3. Switched mode power supply device according to claim 1 **characterized in that** it comprises:
- a first Operational Amplifier (A.O.) 106 whose positive input receives a reference voltage and arranged to form a linear amplifier so as to generate an error signal which is representative of the difference between the regulated voltage Vₒᵤₜ and the reference voltage V_{ref}, , said first AO (106) being arranged with a negative feedback loop composed of a resistance (107) and a capacitor (108) parallely connected,
- a ramp generation circuit (114, 115) having an input being set to zero in order to generate a ramp voltage upon detection of a reset signal;
- a second Operational Amplifier (109) arranged as a comparator, and receiving at a first input said error signal generated by the output of said first Operational Amplifier (106) and receiving at a second input an output voltage generated by said ramp generation circuit;
- a flip-flop D (110) having an input receiving the output voltage of said second Operational amplifier (109),
- an inverter (116) whose input is connected to the output of said flip-flop D, said inverter (116) having an output connected to the input of said ramp generation circuit (114, 115) being set to zero ;
- a delay element having an input which is connected to the output of said inverter (116) and having an output which is used for controlling said power transistor; said delay element causing a predetermined delay to the switching on of said power transistor.

4. Switched mode power supply device according to claim 1, **characterized in that** it comprises a circuit of desynchronization between the starting of the ramp and the switching on of the power transistor, said circuit comprising:
- a first flip-flop 202 having an input D connected to a reference voltage and an output Q, said first flip-flop being controlled by a clock signal CLK (205);
- a second flip-flop 203 having an input D connected to a reference voltage and an output Q, said first flip-flop being controlled by a clock signal CLK (205); said output Q being connected so as to control the starting of said ramp generation circuit;
- a delay element 100 having an input connected to the output of said first flip-flop (202), and having an output;
- an AND gate (201) having a first input connected to said output of the delay element (100), and a second input connected to the output Q of said second flip-flop (203), and having an output being used for controlling said power transistor;
- said first and second flip-flops being connected to said comparator such that the switching of the latter causes the reset of said first and second flip-flops so as to control the switching off of said power transistor.

5. Switched mode power supply device according to claim 4 **characterized in that** the ramp generation circuit comprises a current source (117) for charging a capacitor (115) and a MOS transistor (114) allowing to periodically discharge said capacitor.

6. Cellular telephone comprising a switched mode power supply device composed of a power transistor (101) being periodically switched on with a periodic ratio Tₒₙ/T and providing a current and a regulated voltage (Vₒᵤₜ) to a load via a LC filter, which includes:
a ramp generation circuit (114, 115) controlled by a clock signal and periodically providing a ramp voltage ;
an error amplification circuit (106) for generating an error voltage (Vₑᵣᵣₒᵣ) representative of the difference between a reference voltage (V_{ref}) and said regulated output voltage (Vₒᵤₜ);
a comparator (109) for comparing the ramp voltage generated by said ramp generation circuit (114, 115) with said error voltage (Vₑᵣᵣₒᵣ) and for providing an output signal arranged for controlling said power transistor (101) the device being **characterized in that** a delay element (100) delays the switching on of said power transistor (101) such that the starting of the ramp and said switching on are desynchronized.

7. Cellular telephone according to claim 6 **characterized in that** said comparator (109) is connected to a flip-flop input (110) and is then disactivated when said comparison has been performed.

8. Cellular telephone according to claim 6 **characterized in that** said power supply device comprises :
- a first Operational Amplifier (A.O.) 106 whose positive input receives a reference voltage and arranged to form a linear amplifier so as to generate an error signal which is representative of the difference between the regulated voltage Vₒᵤₜ and the reference voltage V_{ref}, said first AO (106) being arranged with a negative feedback of composed of a resistance (107) and a capacitor (108) assembled in parallel,
- a ramp generation circuit (114, 115) having an input being set to zero in order to generate a ramp voltage upon detection of a reset signal;
- a second Operational Amplifier (109) arranged as a comparator, and receiving at a first input said error signal generated by the output of said first Operational Amplifier (106) and receiving at a second input an output voltage generated by said ramp generation circuit;
- a flip-flop D (110) having an input receiving the output voltage of said second Operational amplifier (109),
- an inverter (116) whose input is connected to the output of said flip-flop D, said inverter (116) having an output connected to the input of said ramp generation circuit (114, 115) being set to zero ;
- a delay element having an input which is connected to the output of said inverter (116) and having an output which is used for controlling said power transistor; said delay element causing a predetermined delay to the switching on of said power transistor.

9. Cellular telephone according to claim 6 **characterized in that** it comprises a circuit of desynchronization between the starting of the ramp and the switching on of the power transistor, said circuit comprising:
- a first flip-flop 202 having an input D connected to a reference voltage and an output Q, said first flip-flop being controlled by a clock signal CLK (205);
- a second flip-flop 203 having an input D connected to a reference voltage and an output Q, said first flip-flop being controlled by a clock signal CLK (205); said output Q being connected so as to control the starting of said ramp generation circuit;
- a delay element 100 having an input connected to the output of said first flip-flop (202), and having an output;
- an AND gate (201) having a first input connected to said output of the delay element (100), and a second input connected to the output Q of said second flip-flop (203), and having an output being used for controlling said power transistor;
- said first and second flip-flops being connected to said comparator such that the switching of the latter causes the reset of said first and second flip-flops so as to control the switching off of said power transistor.

## Patentansprüche

1. Schaltnetzteil- Vorrichtung aufweisend einen Leistungs- Transistor (101), der periodisch mit einem periodischen Verhältnis Tₒₙ/T eingeschaltet wird und einen Strom und eine geregelte Spannung (Vₒᵤₜ) an eine Last über ein LC- Filter liefert, die umfasst:
eine Rampen- Erzeugungs- Schaltung (114, 115), die von einem TaktSignal gesteuert ist und periodisch eine Rampen- Spannung liefert;
eine Fehler- Verstärkungs- Schaltung (106) zum Erzeugen einer FehlerSpannung (Vₑᵣᵣₒᵣ), die die Abweichung zwischen einer Referenz- Spannung (V_{ref}) und der geregelten Ausgangs- Spannung (Vₒᵤₜ) wiedergibt;
einen Komparator (109) zum Vergleichen der Rampen- Spannung, die von der Rampen- Erzeugungs- Schaltung (114, 115) erzeugt wird, mit der FehlerSpannung (Vₑᵣᵣₒᵣ) und zum Liefern eines Ausgangssignals, das zur Steuerung des Leistungs- Transistors (101) beschaffen ist;
wobei die Vorrichtung **dadurch gekennzeichnet, dass** ein VerzögerungsGlied (100) das Einschalten des Leistungs- Transistors (101) nach der Art zum Desynchronisieren des Anfangs der Rampe und des Einschaltens steuert.

2. Schaltnetzteil- Vorrichtung nach Anspruch 1, **dadurch gekennzeichnet, dass** der Komparator (109) mit einem Flip- Flop- Eingang (110) verbunden und dann deaktiviert ist, wenn der Vergleich durchgeführt worden ist.

3. Schaltnetzteil- Vorrichtung nach Anspruch 1, **dadurch gekennzeichnet, dass** es umfasst:
- einen ersten Operations- Verstärker (A.O.) 106, dessen positiver Eingang eine Referenz- Spannung empfängt und der beschaffen ist, einen linearen Verstärker auszubilden, um somit ein Fehler- Signal zu erzeugen, das repräsentativ die Abweichung zwischen der geregelten Spannung Vₒᵤₜ und der Referenz- Spannung V_{ref} wiedergibt, wobei der erste AO (106) mit einer Rückkopplungs- Schleife bestehend aus einem Widerstand (107) und einem parallel verbundenen Kondensator (108) versehen ist,
- eine Rampen- Erzeugungs- Schaltung (114, 115) mit einem auf Null zurückgesetzten Eingang wird, um eine Rampen- Spannung bei der Detektion eines Rücksetz- Signals zu erzeugen;
- einen zweiten Operations- Verstärker (109), der als ein Komparator ausgebildet ist und der an einem ersten Eingang das Fehler- Signal empfängt, das von dem Ausgang des ersten Operations- Verstärkers (106) erzeugt wird, und der an einem zweiten Eingang eine Ausgangs- Spannung empfängt, die von der Rampen- Erzeugungs- Schaltung erzeugt wird;
- ein D- Flip- Flop D (110), das einen Eingang aufweist, der die AusgangsSpannung des zweiten Operatinns- Verstärkers (109) empfängt;
- einen Inverter (116), dessen Eingang mit dem Ausgang des D- Flip- Flops verbunden ist, wobei der Inverter (116) einen Ausgang aufweist, der mit dem Eingang der auf Null zurückgesetzten Rampen- Erzeugungs- Schaltung (114, 115) verbunden ist;
- ein Verzögerungs- Glied, das einen Eingang aufweist, der mit dem Ausgang des Inverters (116) verbunden ist, und das einen Ausgang aufweist, der zur Steuerung des Leistungs- Transistors verwendet wird; wobei das Verzögerungs- Glied eine vorgebbare Verzögerung für das Schalten des Leistungs- Transistors bewirkt.

4. Schaltnetzteil- Vorrichtung nach Anspruch 1, **dadurch gekennzeichnet, dass** es eine Schaltung zur Desynchronisation zwischen dem Anfang der Rampe und dem Schalten des Leistungs- Transistors aufweist, wobei die Schaltung umfasst:
- ein erstes Flip- Flop 202 mit einem Eingang D, der mit einer ReferenzSpannung verbunden ist, und mit einem Ausgang Q, wobei das erste Flip-Flop von einem Takt- Signal CLK (205) gesteuert wird;
- ein zweites Flip- Flop 203 mit einem Eingang D, der mit einer ReferenzSpannung verbunden ist, und mit einem Ausgang Q, wobei das erste Flip-Flop von einem Takt- Signal CLK gesteuert (205) wird; wobei der Ausgang Q angeschlossen ist, um somit den Start der Rampe- Erzeugungs- Schaltung zu steuern;
- ein Verzögerungs- Element 100 mit einem Eingang, der mit dem Ausgang des ersten Flip- Flops (202) verbunden ist, und mit einem Ausgang;
- ein UND- Gatter (201) mit einem ersten Eingang, der mit dem Ausgang des Verzögerungs- Glieds (100) verbunden ist, und mit einem zweiten Eingang, der mit dem Ausgang Q des zweiten Flip- Flops (203) verbunden ist, und mit einem Ausgang, der zur Steuerung des Leistungs- Transistors verwendet wird;
- wobei die ersten und zweiten Flip- Flops mit dem Komparator so verbunden sind, dass das Schalten des letzteren den Rücksetz der ersten und zweiten Flip- Flops bewirkt, um somit das Ausschalten des Leistungs- Transistors zu steuern.

5. Schaltnetzteil- Vorrichtung nach Anspruch 4 dadurch, dass die Rampen-Erzeugungs- Schaltung eine Strom- Quelle (117) zum Aufladen des Kondensators (115) umfasst und einen MOS- Transistor (114) umfasst, der es ermöglicht, den Kondensator periodisch zu entladen.

6. Mobiltelefon mit einer Schaltnetzteil- Vorrichtung aufweisend einen LeistungsTransistor (101), der periodisch mit einem periodischen Verhältnis Tₒₙ/T eingeschaltet wird und einen Strom und eine geregelte Spannung (Vₒᵤₜ) an eine Last über ein LC- Filter liefert, die umfasst:
eine Rampen- Erzeugungs- Schaltung (114, 115), die von einem TaktSignal gesteuert ist und periodisch eine Rampen- Spannung liefert;
eine Fehler- Verstärkungs- Schaltung (106) zum Erzeugen einer FehlerSpannung (Vₑᵣᵣₒᵣ), die die Abweichung zwischen einer Referenz- Spannung (V_{ref}) und der geregelten Ausgangs- Spannung (Vₒᵤₜ) wiedergibt;
einen Komparator (109) zum Vergleichen der Rampen- Spannung, die von der Rampen- Erzeugungs- Schaltung (114, 115) erzeugt wird, mit der FehlerSpannung (Vₑᵣᵣₒᵣ) und zum Liefern eines Ausgangssignals, das zur Steuerung des Leistungs- Transistors (101) beschaffen ist;
wobei die Vorrichtung **dadurch gekennzeichnet, dass** ein VerzögerungsGlied (100) das Einschalten des Leistungs- Transistors (101) nach der Art zum Desynchronisieren des Anfangs der Rampe und des Einschaltens steuert.

7. Mobiltelefon nach Anspruch 6, **dadurch gekennzeichnet, dass** der Komparator (109) mit einem Flip- Flop- Eingang (110) verbunden und dann deaktiviert ist, wenn der Vergleich durchgeführt worden ist.

8. Mobiltelefon nach Anspruch 6, **dadurch gekennzeichnet, dass** die Schaltnetzteil- Vorrichtung umfasst:
- einen ersten Operations- Verstärker (A.O.) 106, dessen positiver Eingang eine Referenz- Spannung empfängt und der beschaffen ist, einen linearen Verstärker auszubilden, um somit ein Fehler- Signal zu erzeugen, das repräsentativ die Abweichung zwischen der geregelten Spannung Vₒᵤₜ und der Referenz- Spannung V_{ref} wiedergibt, wobei der erste AO (106) mit einer Rückkopplungs- Schleife bestehend aus einem Widerstand (107) und einem parallel verbundenen Kondensator (108) versehen ist.
- eine Rampen- Erzeugungs- Schaltung (114, 115) mit einem auf Null zurückgesetzten Eingang wird, um eine Rampen- Spannung bei der Detektion eines Rücksetz- Signals zu erzeugen;
- einen zweiten Operations- Verstärker (109), der als ein Komparator ausgebildet ist und der an einem ersten Eingang das Fehler- Signal empfängt, das von dem Ausgang des ersten Operations- Verstärkers (106) erzeugt wird, und der an einem zweiten Eingang eine Ausgangs- Spannung empfängt, die von der Rampen- Erzeugungs- Schaltung erzeugt wird;
- ein D- Flip- Flop D (110), das einen Eingang aufweist, der die AusgangsSpannung des zweiten Operations- Verstärkers (109) empfängt;
- einen Inverter (116), dessen Eingang mit dem Ausgang des D- Flip- Flops verbunden ist, wobei der Inverter (116) einen Ausgang aufweist, der mit dem Eingang der auf Null zurückgesetzten Rampen- Erzeugungs- Schaltung (114, 115) verbunden ist;
- ein Verzögerungs- Glied, das einen Eingang aufweist, der mit dem Ausgang des Inverters (116) verbunden ist, und das einen Ausgang aufweist, der zur Steuerung des Leistungs- Transistors verwendet wird; wobei das Verzögerungs- Glied eine vorgebbare Verzögerung für das Schalten des Leistungs- Transistors bewirkt.

9. Mobiltelefon nach Anspruch 6, **dadurch gekennzeichnet, dass** es eine Schaltung zur Desynchronisation zwischen dem Anfang der Rampe und dem Schalten des Leistungs- Transistors aufweist, wobei die Schaltung umfasst:
- ein erstes Flip- Flop 202 mit einem Eingang D, der mit einer ReferenzSpannung verbunden ist, und mit einem Ausgang Q, wobei das erste Flip-Flop von einem Takt- Signal CLK (205) gesteuert wird;
- ein zweites Flip- Flop 203 mit einem Eingang D, der mit einer ReferenzSpannung verbunden ist, und mit einem Ausgang Q, wobei das erste Flip-Flop von einem Takt- Signal CLK gesteuert (205) wird; wobei der Ausgang Q angeschlossen ist, um somit den Start der Rampe- Erzeugungs- Schaltung zu steuern;
- ein Verzögerungs- Element 100 mit einem Eingang, der mit dem Ausgang des ersten Flip- Flops (202) verbunden ist, und mit einem Ausgang;
- ein UND- Gatter (201) mit einem ersten Eingang, der mit dem Ausgang des Verzögerungs- Glieds (100) verbunden ist, und mit einem zweiten Eingang, der mit dem Ausgang Q des zweiten Flip- Flops (203) verbunden ist, und mit einem Ausgang, der zur Steuerung des Leistungs- Transistors verwendet wird;
- wobei die ersten und zweiten Flip- Flops mit dem Komparator so verbunden sind, dass das Schalten des letzteren den Rücksetz der ersten und zweiten Flip- Flops bewirkt, um somit das Ausschalten des Leistungs- Transistors zu steuern.
